# EUROPÄISCHE PATENTANMELDUNG

(11) **EP 1 127 749 A2**
(43) Veröffentlichungstag der Anmeldung: **29.08.2001**
(21) Anmeldenummer: 01103183.8
(22) Anmeldetag: 10.02.2001
(51) Int. Cl.: B60R 19/56, B60G 3/00

(54) **Schutzrahmenanordnung für Strassenfahrzeuge**

(30) Priorität: 24.02.2000 DE 10008472; 07.03.2000 DE 10010998
(71) Anmelder: SCHIMMELPFENNIG, Karl-Heinz, D-48167 Münster (DE)
(72) Erfinder: SCHIMMELPFENNIG, Karl-Heinz, D-48167 Münster (DE)
(74) Vertreter: Habbel, Hans-Georg, Dipl.-Ing.

(57) **Zusammenfassung**

Die Erfindung bezieht sich auf eine Schutzrahmenanordnung als Tragrahmen für Straßenfahrzeuge, wobei der Tragrahmen in der Draufsicht die Außenabmessungen des Fahrzeuges zumindest in der Breite gesehen besitzt und dessen Horizontalstränge die Laufräder des Fahrzeuges außen seitlich umfassen und einen wesentlichen Teil der Strukturfestigkeit des Fahrzeuges erbringen und die Laufräder des Fahrzeuges mittels Einzelradaufhängung am Tragrahmen angebracht sind, wobei Laufräder des Fahrzeuges an einem Radträger angeordnet sind und mit diesen aus einer Betriebsstellung in eine Reparatur- oder Wechselstellung verbringbar sind.

## Beschreibung

Die Erfindung bezieht sich auf eine Schutzrahmenanordnung für Straßenfahrzeuge gemäß dem Oberbegriff des Hauptanspruches.

Die z. B. aus der EP 0 638 029 B1 bekannte Schutzrahmenanordnung z. B. für LKW, Anhänger, LKW-Sattelauflieger und auch PKW weist sicherheitstechnisch deutliche Vorteile gegenüber den bisher bekannten Einrichtungen auf. Diese Schutzrahmenanordnung hat zum Vorteil, daß die strukturfesten Teile dort angesetzt werden, wo sie den Bedürfnissen der passiven Sicherheit schwächerer Verkehrsteilnehmer entsprechen, nämlich an der Außenseite des Fahrzeuges und im Hinblick auf die Kompatibilität mit schwächeren Verkehrsteilnehmern in einer vernünftigen Höhe. Für die Belange der passiven Sicherheit ist es weiterhin wünschenswert, die Außenhaut des Fahrzeuges so glatt wie möglich zu gestalten, da es dann bei schrägen Anstößen zum sogenannten "Leitplankeneffekt" kommt. Im Falle einer Kollision gleitet das schwächere Fahrzeug an der Außenkante des Schutzrahmens wie an einer Leitplanke ab, so daß es zu einer geringeren Geschwindigkeitsänderung kommt.

Der bekannte, als Schutzrahmen ausgebildete Tragrahmen ersetzt den bisher mittig angeordneten, tragenden sogenannten Leiterrahmen durch einen tragenden, hohen Fahrzeugaußenrahmen, ggf. mit Bodenabschlußplatten. Alle tragenden Rahmenelemente sind konsequent nach außen verlagert. Die luftgefederte Achse ist bei den zum Stand der Technik gehörenden Schutzrahmenanordnungen im Rahmen integriert. Da die zum Stand der Technik gehörende Schutzrahmenanordnung auch im Heck als massiver Träger ausgelegt ist, kann eine Zugmaschine nach einem Aufprall auf einen Sattelaufliegerrahmen diesen nicht mehr unterfahren, wobei zusätzlich am Heck der Schutzrahmenanordnung auch Deformationselemente vorgesehen sein können, so daß die bekannte Schutzrahmenanordnung eine Kombination von Knautschzone und Gleitzone verwirklicht.
Da bei der bekannten Anordnung die luftgefederte Achse im Rahmen integriert ist, ist ein Reifenwechsel unter dem Fahrzeug praxisfern, ebenso wie ein Reifenwechsel durch die oben und unten angeordneten Längsträger oder Horizontalstränge so gut wie unmöglich. Im Stand der Technik mußten daher im Radbereich die tragenden Rahmenstrukturen außen unterbrochen werden.

Aus der gattungsbildenden DE 43 17 479 A1 ist eine Hauptrahmenanordnung für Straßenfahrzeuge bekannt, bei welcher einige Räder des Fahrzeuges über Achsstummel innen am Hauptrahmen befestigt sind. Auch bei dieser Anordnung ist ein Reifenwechsel unter dem Fahrzeug praxisfern und auch hier mußte daher im Radbereich die tragende Rahmenkonstruktion unterbrochen werden.

Aus der EP-A 650 883 ist eine Einzelradaufhängung bekanntgeworden, bei der ein Radträger vorgesehen wird, der gegenüber einem Fahrzeugrahmen durch Führungs- und Federmittel höhenbeweglich geführt ist und einen zusätzlichen Freiheitsgrad aufweist, der dem Radträger eine Schwenkbewegung in einer Fahrzeugquerebene um eine in Fahrzeuglängsrichtung verlaufende Drehachse erlaubt. Bei dieser Anordnung befinden sich die Räder mit ihrem Radträger außerhalb der Karosserie und sind über Aufhängepunkte und Gelenke außen am üblichen Leiterrahmen des Fahrzeuges angeordnet. Die Vorteile der Schutzrahmenanordnung, die in der Draufsicht die Außenabmessungen des Fahrzeuges zumindest in der Breite besitzt und dessen Horizontalstränge die Laufräder des Fahrzeuges außen umfassen, wird bei dieser bekannten Anordnung nicht verwirklicht.

Der Erfindung liegt die Aufgabe zugrunde, die zum Stand der Technik gemäß der gattungsbildenden Literaturstelle gehörende Schutzrahmenanordnung mit einer Anordnung auszurüsten, die den Reifenwechsel verbessert. Gleichzeitig wird erreicht, daß auch das Eigengewicht verringert und das Ladevolumen des Fahrzeuges vergrößert wird.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt, wird gemäß der Erfindung vorgeschlagen, daß jedes Laufrad oder einige der Laufräder des Fahrzeuges an einem eigenen Radträger angeordnet ist, der abnehmbar in den die Räder außen umgreifenden Tragrahmen integriert ist, so daß das Rad aus einer Betriebsstellung in eine Reparaturstellung oder Wechselstellung zusammen mit dem Radträger verbracht werden kann. Zum Radwechsel kann der Radträger z. B. aus dem Tragrahmen abnehmbar betätigt werden.

Ist der Radträger nur abnehmbar in den Tragrahmen integriert, ist das Herauslösen des Radträgers mit dem von diesem in Einzelradaufhängungen getragenen Rad noch schwierig, da hier erhebliche Gewichte bewältigt werden und ggf. der Tragrahmen unterbrochen werden müßte, ist aber, wie gemäß der Erfindung weiterhin vorgeschlagen wird, der Radträger im Bereich der Horizontalstränge aus dem Tragrahmen ausschwenkbar am Tragrahmen angeordnet, ist ein einfaches Aufklappen des Radträgers nach außen hin möglich, indem beispielsweise mehrere Schrauben gelöst werden, mit denen der Radträger an den Horizontalsträngen oder Vertikalsträngen befestigt ist. Er kann nunmehr über entsprechende Schwenklager, die in die Horizontalstränge integriert sind, nach außen geklappt werden.

Gemäß einem wesentlichen Merkmal der Erfindung wird weiterhin vorgeschlagen, daß der Radträger die Radnabe und das Rad derart trägt, daß die Radbefestigungsbolzen und Radbefestigungsmuttern zum Inneren des Tragrahmens hin gerichtet sind, so daß bei Herausnehmen des Radträgers, insbesondere beim Herausklappen des Radträgers, nunmehr diese Radbefestigungsbolzen und Radbefestigungsmuttern wie auf einem Tisch liegend frei zugänglich sind, so daß dadurch der Radwechsel gegenüber dem Stand der Technik erheblich erleichtert wird. Durch diese Anordnung ist von außen eine Sichtkontrolle von Bremsen und Federung möglich. Außerdem wird die Wärme der Bremsscheiben einfacher und wirksamer abgeleitet.

Hierbei ist es durchaus auch denkbar, Radnabe und Radschüssel so auszubilden, daß die Radbefestigungselemente, wie Schrauben und Muttern, von außen her zugänglich sind, also von der Außenseite des Fahrzeuges her gelöst werden können, so daß dann das "losgeschraubte" Rad mit dem Radträger nach außen geklappt werden kann.

Das Rad, das im wesentlichen u. a. aus der Radnabe der Radschüssel, der Felge, dem Reifen und der Scheibenbremse besteht, stützt sich über einen Verbindungssträger an einer Luftfederung ab, wobei der Verbindungsträger die Radnabe mittig tragen kann und sich endständig an Luftfederbälgen abstützt oder der Verbindungsträger trägt die Radnabe z. B. ebenfalls mittig, aber ist einenendes schwenkbar über ein Schwenklager am Radträger gelagert und stützt sich anderenendes an einem Luftfederbalg ab.

Hierbei ist es möglich, daß sich die Luftfederung an dem Radträger abstützt oder auch, daß sich die Luftfederung an dem oder einem der Horizontalstränge abstützt. Die Luftfederbälge können zweiteilig ausgebildet sein und sowohl am Radträger als auch am Horizontalstrang angeordnet sein.

Der Radträger wird vorzugsweise an vertikalen Quersträngen der Horizontalstränge angeschraubt und zusätzlich sind Längslenker und Querlenker vorgesehen, wobei auch eine entsprechende Stoßdämpferanordnung am Radträger angeordnet sein kann.

Ausführungsbeispiele der Erfindung werden nachfolgend anhand der Zeichnungen erläutert. Die Zeichnungen zeigen dabei in
- Fig. 1: eine mögliche Ausführungsform eines Tragrahmens einer Schutzrahmenanordnung, in
- Fig. 2: in größerem Maßstab die Anordnung eines Radträgers innerhalb der Horizontalstränge gemäß der Ausführungsform nach Fig. 1, in
- Fig. 3: eine schematische Darstellung der Radlagerung am Radträger, in
- Fig. 4: eine abgeänderte Ausführungsform der Radlagerung am Radträger, in
- Fig. 5: schematisch eine Ansicht in Längsachse des Fahrzeuges auf Radträger und Laufrad und in
- Fig. 6: schematisch einen ausgeklappten Radträger.

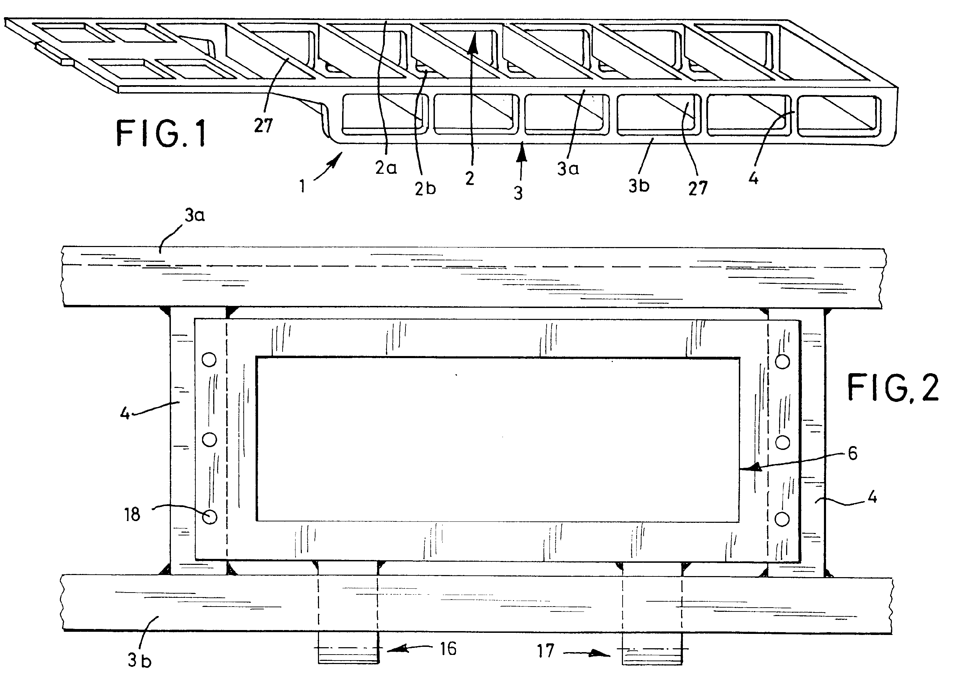

In Fig. 1 ist ein Tragrahmen 1 für einen Sattelauflieger dargestellt, der Horizontalstränge 2 und 3 aufweist, wobei jeder Horizontalstrang 2 oder 3 aus einem oberen Strang 2a bzw. 3a und einem unteren Strang 2b bzw. 3b besteht. Die Horizontalstränge 2, 3 werden durch vertikale Querstränge 4 verstärkt und zusätzlich sind Querriegel 27 vorgesehen, die nunmehr die Stränge 2 und 3 miteinander verbinden.

Der Tragrahmen 1 ist als Fahrzeugrahmen ausgebildet, wobei im fertigen Zustand die Horizontalstränge 2 und 3 mit ihren oberen und unteren Strängen nach außen hin mit in der Zeichnung nicht dargestellten Verschlußplatten ausgerüstet sind, die den sogenannten Gleiteffekt oder Leitplankeneffekt ermöglichen.

An dieser Stelle sei ausdrücklich darauf hingewiesen, daß anstelle der übereinander angeordneten Horizontalstränge 2a und 2b bz. 3a und 3b auch leitplankenähnliche, geschlossene, ggf. profilierte Träger eingesetzt werden können.

Fig. 2 zeigt, daß bei der Ausführungsform gemäß Fig. 1 in den zwischen den vertikalen Quersträngen 4 vorgesehenen Raum ein Radträger 6 integriert ist, der über Schwenklager 16, 17 am unteren Horizontalstrang 3b schwenkbar gelagert ist. Die Festlegung des Radträgers 6 erfolgt außer über die Schwenklager 16 und 17 am Horizontalstrang 3b auch über Befestigungsschrauben 18 an den vertikalen Quersträngen 4 und dem Horizontalstrang 3a.

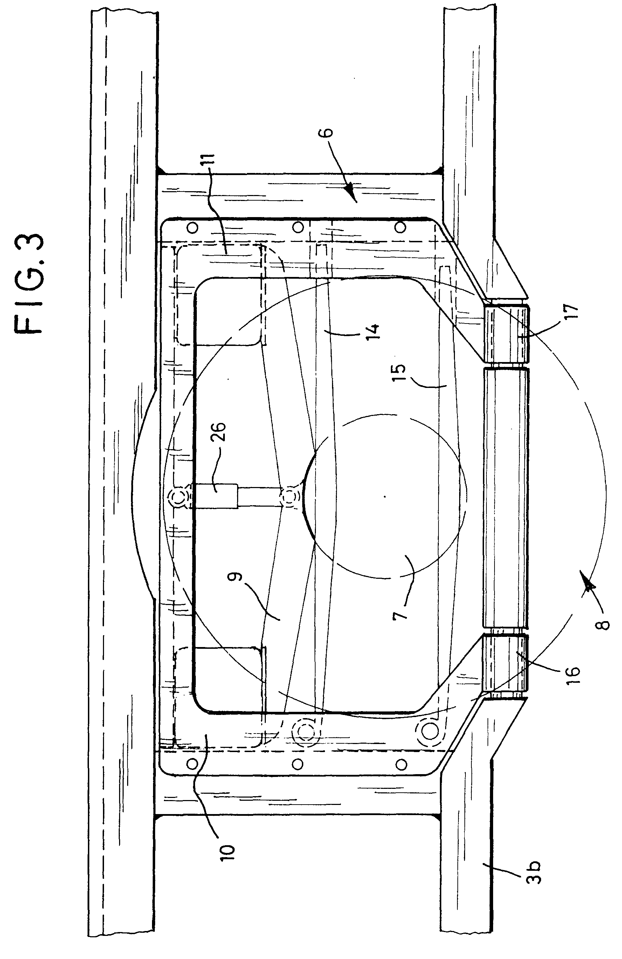

Im Prinzip zeigt Fig. 3 die Anordnung gemäß Fig. 2, wobei hier nur als konstruktives Einzelteil eine Anordnung dargestellt ist, bei der der untere Horizontalstrang 3b im Bereich des Radträgers 6 etwas nach unten abgewinkelt ist. Hierbei kann der untere Horizontalstrang 3b im Bereich der gelenkigen Lagerung des Radträgers 6 unterbrochen sein und hier eine Schwenkachse tragen, an der die Schwenklager 16 und 17 angreifen. In gleicher Weise kann aber auch der untere Horizontalstrang 3b durchlaufend ausgebildet sein, wobei dann die Schwenklager 16, 17 den unteren Horizontalstrang 3b umgreifen oder an gesonderten Schwenkachsen angreifen.

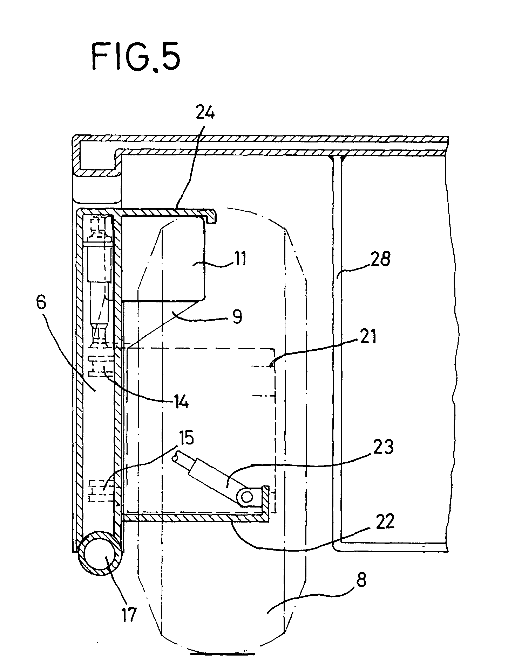

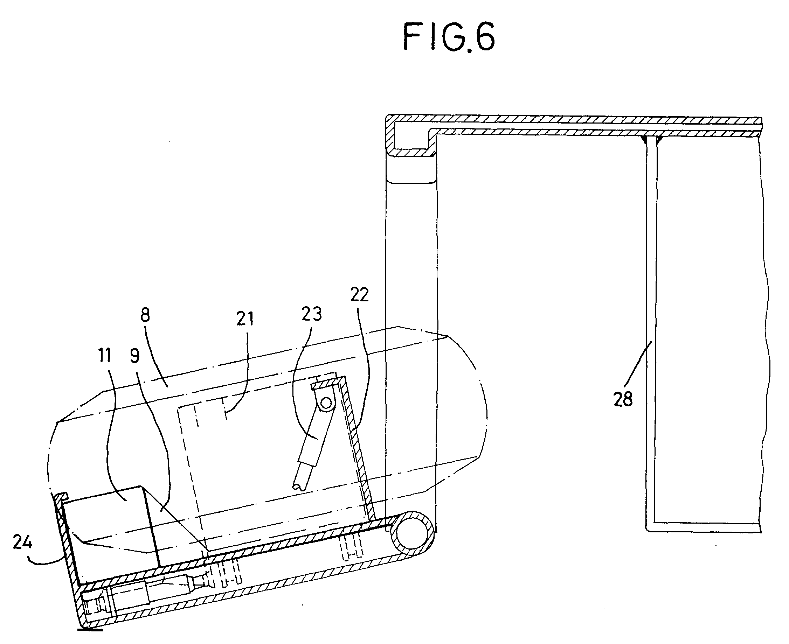

In Fig. 3 ist eine Radnabe 7 angedeutet, die ein Rad 8 trägt, das ebenfalls nur schematisch angedeutet ist. Hierbei wird die Radnabe 7 und das Rad 8 von einem Verbindungsträger 9 fest getragen, wobei endständig der Verbindungsträger 9 sich an Lagerungen für Luftbälge 10 und 11 abstützt, die sich entweder an einer nach innen vorkragenden Abstützplatte 24 des Radträgers 6 abstützen (Fig. 5) oder sich auch an der Unterseite des oberen Horizontalstranges 3a abstützen können. Zusätzlich sind Längslenker 14 und 15 erkennbar und eine Stoßdämpferanordnung 26, ohne daß die Erfindung auf dieses Ausführungsbeispiel in irgendeiner Weise beschränkt ist. Das Ausführungsbeispiel gemäß Fig. 3 soll nur verdeutlichen, wie es möglich ist, das Rad 8 an dem Radträger 6 anzuordnen. Wesentlich ist hierbei, daß es nunmehr möglich ist, wie in Fig. 6 gezeigt, das Rad 8 zusammen mit dem Radträger 6 und der Lagerungen für Luftbälge 10, 11 nach außen hin aufzuklappen, so daß nunmehr die in Fig. 5 und Fig. 6 schematisch angedeuteten Radbefestigungsbolzen 21 nach außen und oben hin zeigen, d. h. leicht und frei zugänglich sind, so daß ein Reifenwechsel problemlos möglich ist. Die Fig. 5 und 6 zeigen auch, daß durch die neue Lösung das Ladevolumen vergrößert wird, da im Bereich der in den Fig. 5 und 6 gezeigten Karosseriewandung 28 zusätzlich Raum geschaffen wird, der bisher durch Achsen besetzt war.

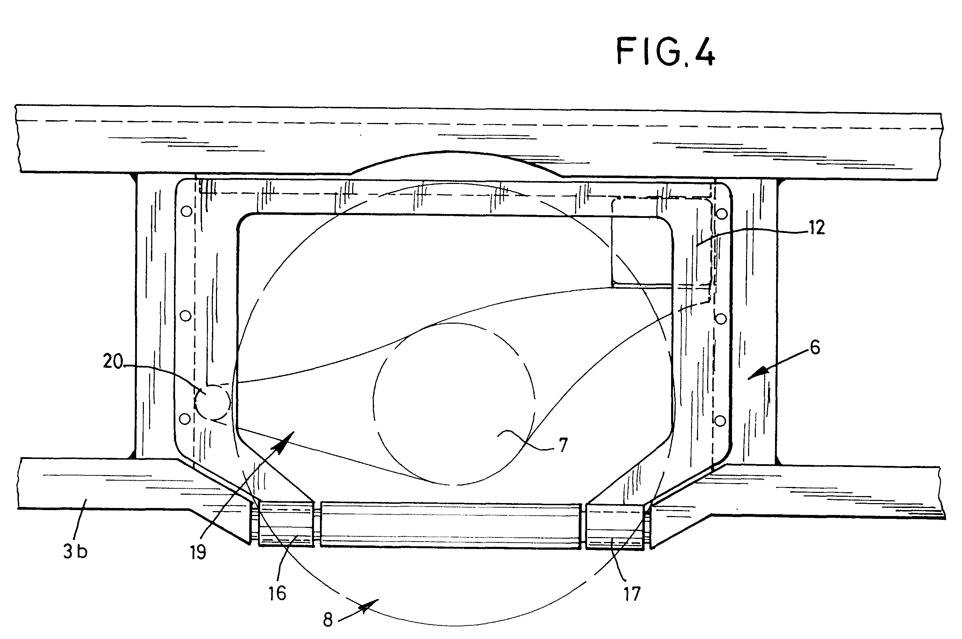

Bei der Ausführungsform gemäß Fig. 4 trägt der Radträger 6 ein Schwenklager 20, an dem ein Verbindungsträger 19 schwenkbar angreift, der mit der Radnabe 7 verbunden ist und sich anderenendes, also dem Schwenklager 20 gegenüber, an einem Luftfederbalg 12 abstützt, der seinerseits wieder am Radträger 6 befestigt sein kann.

An dieser Stelle sei ausdrücklich darauf hingewiesen, daß die Ausbildung der Längslenker 14, 15 und die Ausbildung der Lagerungen für Luftbälge 10, 11 und 12 nur rein schematisch dargestellt ist ebenso wie die aus Fig. 3 erkennbare Stoßdämpferanordnung 26. Weiterhin sind integrierte Scheibenbremsen nicht dargestellt, da die Ausbildung des eigentlichen Rades und die Ausbildung der eigentlichen Einzelradaufhängung beliebig sein kann. Fig. 5 und Fig. 6 zeigen einen Teil eines Querlenkers 23, der auf einer Stützplatte 22 einenendes angreift.

Entscheidend ist, daß die Einzelradaufhängung an einem Radträger 6 anschließt, der abnehmbar z. B. in den Horizontalstrang 2 oder 3 eines Tragrahmens 1 integriert ist, wobei die Horizontalstränge 2 und 3 des Tragrahmens 1 das eigentliche Rad außen umfassen und dadurch die übliche Leiterrahmenstruktur verlassen wird, bei der zwei in Längsrichtung verlaufende, im wesentlichen aber innerhalb der Laufräder des Fahrzeuges angeordnete Träger durch Quertraversen nach außen hin verbreitert sind.

### Bezugszeichenliste:

- 1: Tragrahmen
- 2: Horizontalstränge
- 2a: oberer Strang
- 2b: unterer Strang
- 3: Horizontalstränge
- 3a: oberer Strang
- 3b: unterer Strang
- 4: Querstränge
- 5 6: Radträger
- 7: Radnabe
- 8: Rad
- 9: Verbindungsträger
- 10: Luftfeder
- 11: Luftfeder .
- 12: Luftfeder
- 13: ..
- 14: Längslenker
- 15: Längslenker
- 16: Schwenklager
- 17: Schwenklager
- 18: Bef. Schrauben
- 19: Verbindungsträger
- 20: Schwenklager
- 21: Radbefestigungsbolzen
- 22: Stützplatte
- 23: Querlenker
- 24: Abstützplatte
- 26: Stoßdämpfer
- 27: Querriegel
- 28: Karosseriewandung

## Patentansprüche

1. Schutzrahmenanordnung als Tragrahmen (1) für Straßenfahrzeuge. der in der Draufsicht die Außenabmessungen des Fahrzeuges zumindest in der Breite besitzt und dessen Horizontalstränge (2, 3) die Laufräder (8) des Fahrzeuges außen seitlich umfassen und einen wesentlichen Teil der Strukturfestigkeit des Fahrzeuges erbringen, wobei Laufräder (8) des Fahrzeuges mittels Einzelradaufhängung am Tragrahmen (1) angeordnet sind, dadurch gekennzeichnet, daß das Laufrad (8) des Fahrzeuges an einem Radträger (6) angeordnet ist, der abnehmbar in den Tragrahmen (1) integriert ist.

2. Schutzrahmenanordnung als Tragrahmen (1) für Straßenfahrzeuge, der in der Draufsicht die Außenabmessungen des Fahrzeuges zumindest in der Breite besitzt und dessen Horizontalstränge (2, 3) die Laufräder (8) des Fahrzeuges außen seitlich umfassen und einen wesentlichen Teil der Strukturfestigkeit des Fahrzeuges erbringen, wobei Laufräder (8) des Fahrzeuges mittels Einzelradaufhängung am Tragrahmen
(1) angeordnet sind, dadurch gekennzeichnet, daß das Laufrad (8) des Fahrzeuges an einem Radträger (6) angeordnet ist, der im Bereich der Horizontalstränge (2, 3) aus dem Tragrahmen (1) ausschwenkbar am Tragrahmen (1) angeordnet ist.

3. Schutzrahmenanordnung nach Anspruch 1 oder 2, dadurch gekennzeichnet, daß der Radträger (6) die Radnabe (7) und das Rad (8) derart trägt, daß die Radbefestigungsbolzen bzw. Radbefestigungsmuttern zum Inneren des vom Tragrahmen (1) umschlossenen Raumes hin gerichtet sind.

4. Schutzrahmenanordnung nach einem oder mehreren der vorhergehenden Ansprüche, dadurch gekennzeichnet, daß der Radträger (6) an vertikalen Quersträngen (4) der Horizontalstränge (2, 3) angeschraubt (bei 18) ist.

5. Schutzrahmenanordnung nach einem oder mehreren der vorhergehenden Ansprüche, dadurch gekennzeichnet, daß sich die Radnabe (7) über Verbindungsträger (9, 19) an einer Luftfederung (10, 11, 12) abstützt.

6. Schutzrahmenanordnung nach einem der vorhergehenden Ansprüche 1 bis 5, dadurch gekennzeichnet, daß der Verbindungsträger (9) die Radnabe (7) mittig trägt und sich endständig an Luftfederbälgen (10, 11) abstützt.

7. Schutzrahmenanordnung nach einem der vorhergehenden Ansprüche 1 bis 5, dadurch gekennzeichnet, daß der Verbindungsträger (19) die Radnabe (7) mittig trägt, einenendes schwenkbar (Schwenklager 20) am Radträger (6) gelagert ist und sich anderenendes an einer Lagerung für einen Luftfederbalg (12) abstützt.

8. Schutzrahmenanordnung nach einem der vorhergehenden Ansprüche, dadurch gekennzeichnet, daß sich der oder die Lagerungen für Luftfederbälge (10, 11; 12) an dem Radträger
(6) abstützen.

9. Schutzrahmenanordnung nach einem der vorhergehenden Ansprüche 1 bis 7, dadurch gekennzeichnet, daß sich der oder die Lagerungen für Luftfederbälge (10, 11; 12) an dem Horizontalstrang (2, 3) abstützen.

10. Schutzrahmenanordnung nach einem der vorhergehenden Ansprüche, dadurch gekennzeichnet, daß der Radträger (6) Längslenker (14, 15) trägt.

11. Schutzrahmenanordnung nach einem der vorhergehenden Ansprüche, dadurch gekennzeichnet, daß der Radträger (6) Querlenker (23) trägt.

12. Schutzrahmenanordnung nach einem der vorhergehenden Ansprüche, dadurch gekennzeichnet, daß der Radträger (6) mit Stoßdämpfer (26) ausgerüstet ist.

13. Schutzrahmenanordnung nach einem oder mehreren der vorhergehenden Ansprüche, dadurch gekennzeichnet, daß das Rad (8) auch eine Scheibenbremse aufweist.
